(19) Europäisches Patentamt
European Patent Office
Office européen des brevets

(11) **EP 2 591 928 B1**

(12) **EUROPÄISCHE PATENTSCHRIFT**

(45) Veröffentlichungstag und Bekanntmachung des Hinweises auf die Patenterteilung:
**25.02.2015 Patentblatt 2015/09**

(51) Int Cl.:
*B60G 17/052* (2006.01)      *B60G 17/018* (2006.01)
*B60G 17/015* (2006.01)

(21) Anmeldenummer: **12005949.8**

(22) Anmeldetag: **18.08.2012**

(54) **Einstellung der Stützlast eines Zentralachsanhängers**

Adjustment of the bearing load of a central axle trailer

Réglage de la charge d'appui d'une remorque à essieu central

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.11.2011 DE 102011118167**

(43) Veröffentlichungstag der Anmeldung:
**15.05.2013 Patentblatt 2013/20**

(73) Patentinhaber: **WABCO GmbH**
**30453 Hannover (DE)**

(72) Erfinder:
• **Risse, Rainer**
**30982 Pattensen-Reden (DE)**
• **Stender, Axel**
**31787 Hameln (DE)**

(56) Entgegenhaltungen:
**EP-A1- 2 138 333          EP-A1- 2 390 121
EP-A2- 1 571 015          DE-A1- 19 718 258
DE-A1- 19 721 130          DE-A1- 19 801 546
DE-A1-102007 015 954**

EP 2 591 928 B1

**Beschreibung**

Die Erfindung betrifft ein Verfahren zur Einstellung der Stützlast eines Zentralachsanhängers gemäß dem Oberbegriff des Anspruchs 1. Die Erfindung betrifft außerdem eine elektronische Steuerungseinrichtung, die eingerichtet ist zur Einstellung der Stützlast eines Zentralachsanhängers, wie im Anspruch 8 angegeben. Weiter betrifft die Erfindung eine Luftfederungsanlage gemäß Anspruch 9 und einen Zentralachsanhänger gemäß Anspruch 12.

Als Zentralachsanhänger bezeichnet man Anhängefahrzeuge, bei denen, wie die Bezeichnung bereits andeutet, die Fahrzeugachsen in Bezug auf die Längsrichtung des Anhängefahrzeugs zentral angeordnet sind, d. h. etwa mittig bezüglich der Längserstreckung der Ladefläche. Zentralachsanhänger gibt es in Ausführungen mit einer einzigen zentralen Fahrzeugachse oder mehreren Fahrzeugachsen, z. B. zwei oder drei Achsen, die dann relativ dicht beieinander ebenfalls zentral bezüglich der Längserstreckung der Ladefläche angeordnet sind. Im Gegensatz zu einem Auflieger ist ein Zentralachsanhänger nicht zum Ankoppeln an eine Sattelzugmaschine ausgebildet, sondern weist eine Anhängerkupplung auf, über die er mit einer als Gegenstück ausgebildeten Kupplungseinrichtung eines Lastkraftwagens koppelbar ist. Aufgrund der zentralen Anordnung der Fahrzeugachsen ist bei Zentralachsanhängern auf eine geeignete Beladungsverteilung zu achten, um die an der Anhängerkupplung auftretende Stützlast nicht zu groß oder zu gering werden zu lassen. Bei jeder Änderung der Beladung des Zentralachsanhängers ist wieder erneut auf eine geeignete Beladungsverteilung zu achten, was es in der Praxis bei kommerziellen Nutzfahrzeugen erfordert, dass nach dem Ändern der Beladung die Stützlast gemessen wird und ggf. die Beladungsverteilung geändert wird.

Eine zu geringe Stützlast kann ein instabiles Fahrverhalten des Zugfahrzeugs oder des gesamten Fahrzeugzugs verursachen. Eine zu hohe Stützlast kann zu einer Überlastung des Zugfahrzeugs führen, insbesondere der hinteren Rahmenstruktur des Zugfahrzeugs. Im Bereich kommerzieller Nutzfahrzeuge ist vom Gesetzgeber ein Bereich der Stützlast von 0,5 bis 2 Tonnen vorgeschrieben.

EP 2 390 121 A1 offenbart einen Nutzfahrzeug-Anhänger mit einer Mehrfach-Achsanordnung, wobei vorgeschlagen wird, eine Luftfederanordnung in wenigstens zwei jeweils einer der zwei Achsen zugeordnete Teilfederanordnungen aufzuteilen, welche getrennt voneinander mit unterschiedlichen Luftdrücken betrieben werden können. Durch Ermitteln und Auswerten von Messwerten, welche von Gewicht und Schwerpunkt des Anhängers abhängen, während eines Messdurchlaufs können Steuerwerte für die Einstellung der Teilfederanordnungen im Fahrbetrieb des Anhängers abgeleitet werden.

DE 197 18 258 A1 offenbart Zentralachsanhänger, die aufgrund der konstruktiven Gegebenheiten im Straßenfahrzeugbau so ausgelegt sind, dass sie im Prinzip nur mittig beladen werden können. Dies ist aber bei Verteilerfahrzeugen mit geschlossenem Aufbau durch alleinige Be- und Entladung durch die Hecktür nicht möglich. Aus diesem Grund fährt ein hoher Prozentsatz von Gespannen mit Zentralachsanhängern mit weit überhöhten Achs- und/oder Stützlasten. Es wird vorgeschlagen, die Lastverteilung beim Zentralachsanhänger unter dem Achsenpaar getrennt, ungleich, proportional zu der Lastverteilung zu regeln. Dies geschieht dadurch, dass bei ungleicher Teilbeladung diejenige Achse, die die überhöhte Stützlast erzeugt, durch Reduzierung des Luftdruckes in den Luftfederbälgen entlastet wird. Vorzugsweise Zentralachsanhänger mit geschlossenem Aufbau im Verteilerverkehr.

EP 2 138 333 A1 offenbart eine Achshöhensteuerung für einen Lastzug, der ein Sattelzugfahrzeug, das eine Vorderachse und mindestens eine Antriebsachse, die eine vorgegebene Nenn-Achslast hat, umfasst, einen Sattelanhänger, der eine erste Achse und mindestens eine zweite Achse besitzt, und eine Achslast-Einstellvorrichtung, die einen Achshöhenantrieb für die erste Achse umfasst, sodass eine Antriebsachsen-Achslast auf die Antriebsachse durch Verstellen einer Höhe der ersten Achse veränderbar ist, aufweist, die eingerichtet ist zum automatischen Durchführen eines Verfahrens mit dem Schritt: Schalten in einen Anfahrhilfe-Modus, in dem die Zweitachsen-Achslast auf eine Anfahrhilfe-Achslast erhöht wird, die stets unterhalb einer vorgegebenen Maximal-Achslast liegt. Es ist vorgesehen, dass die Achshöhensteuerung eingerichtet ist zum automatischen Durchführen eines Verfahrens mit den Schritten: Erfassen einer Aktivierung einer Geländeanfahr-Achslast, die größer ist als die Maximal-Achslast, wenn die Geländeanfahr-Erfassungsvorrichtung aktiviert ist.

Der Erfindung liegt die Aufgabe zugrunde, ein Verfahren zur Einstellung der Stützlast eines Zentrallastanhängers mit wenigstens zwei Achsen und einer Luftfederungsanlage anzugeben, das einen sicheren Fahrbetrieb auch bei häufig wechselnder Beladung des Zentralachsanhängers erlaubt. Ferner soll eine hierfür geeignete elektronische Steuerungseinrichtung, eine Luftfederungsanlage sowie eine geeigneter Zentralachsanhänger angegeben werden.

Diese Aufgabe wird gemäß Anspruch 1 gelöst durch ein Verfahren zur Einstellung der Stützlast eines Zentralachsanhängers mit wenigstens zwei luftgefederten Achsen und einer Luftfederungsanlage, wobei die Luftfederungsanlage für wenigstens zwei luftgefederte Achsen des Zentralachsanhängers achsweise getrennte Luftfederungskreise aufweist, in denen die jeweiligen Luftmengen getrennt voneinander einstellbar sind, und dass festgestellt wird, ob die aktuelle Stützlast außerhalb eines zulässigen Stützlastbereichs liegt, und, wenn die aktuelle Stützlast außerhalb des zulässigen Stützlastbereichs liegt, bei einer Überschreitung des zulässigen Stützlastbereichs die aktuelle Stützlast durch achsweise getrennte Veränderung der Luftmenge in wenigstens einem der Luftfederungskreise verringert wird und bei einer Unterschreitung des zulässigen Stützlastbereichs die aktuelle Stützlast durch achsweise getrennte Veränderung der Luftmenge in wenigstens einem der Luftfederungskreise erhöht wird. Gemäß der Erfindung wird somit ein Verfahren für einen Zentralachsanhänger vorgeschlagen, bei dem eine Luftfederungsanlage für wenigstens zwei Achsen achsweise getrennt eine Einstellung der jeweiligen Luftmengen erlaubt. Dies ermöglicht es, den Druck jeder Achse oder Achsgruppe gegenüber der (den) anderen Achse(n) zu erhöhen oder zu erniedrigen. Etwas Derartiges war bei bekannten Zentralachsanhängern nicht möglich. Sofern Zentralachsanhänger überhaupt mit einer Luftfederungsanlage ausgestattet waren, so waren die Luftfederbälge zu einem einzigen Luftfederungskreis zusammengeschaltet, so dass keine achsweise getrennte Einstellung der Luftmengen möglich war bzw. bei einer verwendeten Lift- oder Schleppachse der Druck dieser Achse nur reduziert werden konnte.

Erfindungsgemäß wird festgestellt, ob die aktuelle Stützlast des Zentralachsanhängers außerhalb eines zulässigen Stützlastbereichs liegt. Wenn dies der Fall ist, wird eine achsweise getrennte Veränderung der Luftmenge in wenigstens einem der Luftfederungskreise durchgeführt, d.h. es wird zur Anpassung der Stützlast von der Möglichkeit der achsweise getrennten Einstellung der Luftmengen in den Luftfederungskreisen gebrauch gemacht. Der zulässige Stützlastbereich kann ein durch einen oberen und einen unteren Grenzwert eingegrenzter Bereich sein, oder ein einseitig offener Bereich. So kann der zulässige Stützlastbereich beispielsweise den Bereich sämtlicher positiver Werte der Stützlast einschließlich des Werts Null umfassen, d. h., außerhalb des zulässigen Stützlastbereichs liegende Werte sind dann negative Werte. Hierbei sei angemerkt, dass als positive Werte der Stützlast Werte verstanden werden, bei denen die Anhängerkupplung in Richtung Fahrbahn gezogen wird.

Der zulässige Stützlastbereich kann auch ein vom Hersteller des Zentralachsanhängers oder des Zugfahrzeugs spezifizierter zulässiger Bereich sein, oder ein gesetzlich vorgeschriebener zulässiger Stützlastbereich, z. B. der in der EU geltende zulässige Bereich von 0,5 bis 2 Tonnen.

Für die Feststellung, ob die aktuelle Stützlast außerhalb eines zulässigen Stützlastbereichs liegt, kann z. B. die aktuelle Stützlast an der Anhängerkupplung gemessen werden, z. B. mit einem Kraftsensor. Die Feststellung, ob die aktuelle Stützlast außerhalb des zulässigen Stützlastbereichs liegt, und die ggf. durchgeführte Veränderung der Luftmenge in wenigstens einem der Luftfederungskreise kann z. B. automatisch durch eine elektronische Steuerungseinrichtung durchgeführt werden. Die elektronische Steuerungseinrichtung kann z. B. Teil einer elektronisch gesteuerten Luftfederungsanlage oder eines elektronisch gesteuerten Bremssystems des Zentralachsanhängers sein. Für die Veränderung der Luftmenge in wenigstens einem der Luftfederungskreise kann die elektronische Steuerungseinrichtung mit einer elektrisch betätigbaren pneumatischen Ventileinrichtung verbunden sein: Durch Ansteuerung der Ventileinrichtung durch die elektronische Steuerungseinrichtung kann die Luftmenge entsprechend verändert werden, indem aus einem Vorratsbehälter Luft in Luftfederbälge eingefüllt wird oder aus den Luftfederbälgen Luft abgelassen wird.

Für die automatische Feststellung, ob die aktuelle Stützlast außerhalb eines zulässigen Stützlastbereichs liegt, kann die elektronische Steuerungseinrichtung mit einem oder mehreren entsprechenden Sensoren verbunden sein, z. b. mit einem an der Anhängerkupplung angeordneten Kraftsensor, mit dem die Stützlast gemessen werden kann.

Gemäß einer vorteilhaften Weiterbildung der Erfindung wird mittels der Achslasten der wenigstens zwei luftgefederten Achsen festgestellt, ob die aktuelle Stützlast außerhalb eines zulässigen Stützlastbereichs liegt, und dann ggf. eine entsprechende Veränderung der Luftmenge in wenigstens einem der Luftfederungskreise durchgeführt. Die Achslasten können von der elektronischen Steuerungseinrichtung z. B. über Achslastsensoren ermittelt werden. Im Falle einer Luftfederung können die Achslasten auch über Luftdrucksensoren, die mit den jeweiligen Luftfederbälgen verbunden sind, bestimmt werden, unter zusätzlicher Berücksichtigung geometrischer Daten der Luftfederbälge sowie der Achsaufhängung. Es kann auch vorgesehen sein, dass nicht für jede hinsichtlich der Achslast zu erfassende Achse ein eigener Achslastsensor oder ein Luftdrucksensor vorgesehen ist. Für die Ermittlung der Achslasten an solchen nicht sensierten Achsen kann z. B. bei einer Bremsung des Zentralachsanhängers der Bremsschlupf an den Achsen überwacht werden. Tritt ein Differenzwert zwischen den Bremsschlupfwerten der Achsen auf, kann über diesen Differenzwert unter Heranziehung einer sensorisch erfassten Achslast einer anderen Achse auf die Achslast einer nicht mit Sensoren bestückten Achse geschlossen werden. Vorschläge hierzu sind z.B. in DE 197 07 210 B4 oder DE 10 2008 003 206 A1 gegeben.

Wie erwähnt, kann mittels der Achslasten der wenigstens zwei Achsen festgestellt werden, ob die aktuelle Stützlast außerhalb eines zulässigen Stützlastbereichs liegt. Mittels der Achslasten kann bei entsprechend präziser Achslasterfassung und Kenntnis weiterer geometrischer Fahrzeugdaten die auftretende Stützlast direkt zahlenmäßig berechnet werden. Allerdings ist eine direkte Berechnung der Stützlast kein Erfordernis für die Realisierung der vorliegenden Erfindung. Die Erfindung kann vorteilhaft auch mit einer ungefähren Abschätzung der Stützlast realisiert werden. So erlaubt bereits ein Vergleich, ob die Achslast der vorderen von zwei Achsen kleiner ist als die Achslast der hinteren der zwei Achsen die Beurteilung, dass die Stützlast außerhalb eines zulässigen Stützlastbereichs liegt, da bei einem Zentralachsanhänger immer eine positive Stützlast erwünscht ist und somit die Achslast der vorderen Achse immer größer sein muss als die Achslast der hinteren Achse. So kann bereits bei Erkennung des zuvor erläuterten Falls eine Erhöhung der Stützlast durch achsweise getrennte Veränderung der Luftmenge in wenigstens einem der Luftfederungskreise eingeleitet werden.

Gemäß einer vorteilhaften Weiterbildung der Erfindung wird im Falle, dass die aktuelle Stützlast außerhalb des zulässigen Stützlastbereichs liegt, die aktuelle Stützlast durch achsweise getrennte Veränderung der Luftmenge in wenigstens einem der Luftfederungskreise angepasst, bis die aktuelle Stützlast innerhalb des zulässigen Stützlastbereichs liegt. Die Anpassung der Stützlast kann dabei beendet werden, wenn der zulässige Stützlastbereich gerade eben erreicht ist, oder weitergeführt werden, bis z. B. etwa die Mitte des zulässigen Stützlastbereichs erreicht ist.

Einer Anpassung der aktuellen Stützlast durch achsweise getrennte Veränderung der Luftmenge in wenigstens einem der Luftfederungskreise können durch sehr ungünstige Beladung des Zentralachsanhängers oder durch Grenzwerte für zulässige Achslasten bestimmte Grenzen gesetzt sein. In manchen Fällen kann es vorkommen, dass die aktuelle Stützlast durch Veränderung der Luftmenge in wenigstens einem der Luftfederungskreise nicht bis in den zulässigen Stützlastbereich verändert werden kann. In diesem Fall wird die Stützlast soweit verändert, dass sie zumindest möglichst nahe an den zulässigen Stützlastbereich herankommt.

Gemäß einer vorteilhaften Weiterbildung der Erfindung wird im Falle, dass die aktuelle Stützlast außerhalb des zulässigen Stützlastbereichs liegt, die aktuelle Stützlast durch achsweise getrennte Veränderung der Luftmenge in wenigstens einem der Luftfederungskreise angepasst, bis an wenigstens einer Achse der für diese Achse zulässige Grenzwert der Achslast erreicht ist. Dies hat den Vorteil, dass zulässige Grenzwerte für die Achslasten nicht überschritten werden und damit sowohl der Zentralachsanhänger, die Reifen und die Fahrbahn geschont werden.

Gemäß einer vorteilhaften Weiterbildung der Erfindung wird die Veränderung der Luftmenge in wenigstens einem der Luftfederungskreise automatisch durch eine elektronische Steuerungseinrichtung durch Ansteuerung wenigstens einer elektrisch betätigbaren pneumatischen Ventileinrichtung durchgeführt. Die elektrisch betätigbare pneumatische Ventileinrichtung kann eine gemeinsame, z. B. zweikreisig aufgebaute Ventileinrichtung sein, wenn zwei getrennte Luftfederungskreise zu steuern sind, oder mehrkreisig bei einer Luftfederungsanlage mit mehreren Luftfederungskreisen. Die Ventileinrichtung kann auch einzelne Ventile für jeden Luftfederungskreis aufweisen, z. B. jeweils ein Ventil mit den Funktionen Luftmenge halten, Luftmenge erhöhen und Luftmenge absenken in dem jeweiligen Luftfederungskreis.

Gemäß einer vorteilhaften Weiterbildung der Erfindung können die Achslasten durch Drucksensoren erfasst werden, die mit Luftfederbälgen der Luftfederungskreise verbunden sind. Dies hat den Vorteil, dass die Achslasten auf wenig aufwendige, kostengünstige Weise mit hoher Genauigkeit erfasst werden können.

Gemäß einer vorteilhaften Weiterbildung der Erfindung wird bei einer Überschreitung des zulässigen Stützlastbereichs die Achslast einer zweiten, hinter der ersten Achse des Zentralachsanhängers angeordneten Achse gegenüber der Achslast der ersten Achse verringert. Hierzu kann z. B. die Luftmenge in dem Luftfederungskreis der zweiten Achse verringert werden oder die Luftmenge im Luftfederungskreis der ersten Achse erhöht werden, oder es kann beides durchgeführt werden. Wenn die Luftfederungsanlage eine Niveauregelung aufweist, d. h. eine Funktion zum Konstanthalten einer gewünschten Niveaulage des Aufbaus des Zentralachsanhängers, dann ist der zuvor erläuterten Funktion zur Anpassung der aktuellen Stützlast durch achsweise getrennte Veränderung der Luftmenge in wenigstens einem der Luftfederungskreise die Niveauregelungsfunktion überlagert. Eine stützlastbedingte Veränderung der Luftmenge in einem der Luftfederungskreise würde an sich eine Änderung der Niveaulage nach sich ziehen. Bei vorhandener Niveauregelungsfunktion wird dies aber durch eine entsprechend entgegengesetzte Veränderung der Luftmenge in dem jeweils anderen Luftfederungskreis kompensiert. In diesem Fall ist es vorteilhaft, dass im Falle einer Überschreitung des zulässigen Stützlastbereichs für die Niveauregelungsfunktion die erste Achse die Führungsgröße (Master) bildet und die zweite Achse lediglich mitgeregelt wird (Slave).

Bei einer Unterschreitung des zulässigen Stützlastbereichs ist es dagegen vorteilhaft, wenn die zweite Achse die Führungsgröße für die Niveauregelung bildet und die erste Achse lediglich mitgeregelt wird.

Für den Fall, dass eine oder mehrere Achsen zusätzlich als Liftachse ausgebildet sind, wird gemäß einer vorteilhaften Weiterbildung vorgeschlagen, dass automatisch die Achslifteinrichtung einer oder mehrerer Liftachsen betätigt wird, wenn die aktuelle Stützlast außerhalb des zulässigen Stützlastbereichs liegt. Durch eine entsprechende automatische Betätigung der Achslifteinrichtung einer oder mehrerer Liftachsen kann die aktuelle Stützlast in noch größerem Maße in die gewünschte Richtung beeinflusst werden, um schließlich im zulässigen Stützlastbereich oder zumindest nahe daran zu liegen. Je nach gewünschter Veränderung der aktuellen Stützlast kann dabei automatisch eine Liftachse angehoben oder abgesenkt werden. Durch das Anheben einer Liftachse wird ein durch die Masse der Liftachse bedingtes zusätzliches Moment um die am Boden verbliebene Achse bzw. die am Boden verbliebenen Achsen erzeugt, das zusätzlich die aktuelle Stützlast in gewünschter Richtung beeinflussen kann. So kann z. B. zum Vergrößern der aktuellen Stützlast eine erste, vordere Achse des Zentralachsanhängers mittels der Achslifteinrichtung angehoben werden. Zum Verringern der aktuellen Stützlast kann eine zweite, hintere Achse des Zentralachsanhängers mittels der Achslifteinrichtung angehoben werden.

Die Erfindung betrifft außerdem eine elektronische Steuerungseinrichtung, die eingerichtet ist, zur Einstellung der Stützlast eines Zentralachsanhängers nach einem der zuvor erläuterten Verfahren.

Die Erfindung betrifft außerdem eine Luftfederungsanlage, die eingerichtet ist für einen Zentralachsanhänger mit wenigstens zwei luftgefederten Achsen, wobei die Luftfederungsanlage für die wenigstens zwei luftgefederten Achsen des Zentralachsanhängers achsweise getrennte Luftfederungskreise aufweist, in denen die jeweiligen Luftmengen getrennt voneinander einstellbar sind. Dies erlaubt die Realisierung zusätzlicher vorteilhafter Funktionen der Luftfederungsanlage, wie z. B. die zuvor erläuterten Verfahren.

Gemäß einer vorteilhaften Weiterbildung der Erfindung ist die Luftfederungsanlage mit einer elektronischen Steuerungseinrichtung der zuvor erläuterten Art versehen.

Eine vorteilhafte Weiterbildung der Erfindung betrifft eine Luftfederungsanlage der zuvor beschriebenen Art für einen Zentralachsanhänger mit mehr als zwei luftgefederten Achsen, wobei die Luftfederungsanlage eine geringere Anzahl von achsweise getrennten Luftfederungskreisen als die Anzahl der luftgefederten Achsen des Zentralachsanhängers aufweist. Hierbei sind Luftfederbälge mehrerer Achsen zu einem gemeinsamen Luftfederungskreis verbunden. Dies erlaubt eine besonders kostengünstige Realisierung der Luftfederungsanlage, da nicht für jede luftgefederte Achse ein einzelner, separater Luftfederungskreis erforderlich ist und damit die Anzahl der erforderlichen Komponenten zur Steuerung der Luftmengen gering gehalten werden kann. Bei einem mit drei luftgefederten Achsen ausgestatteten Zentralachsanhänger ist es vorteilhaft, die Luftfederbälge der zwei vorderen Achsen zu einem Luftfederungskreis zusammenzuschalten, wenn der Zentralachsanhänger im Betrieb vorwiegend heckseitig belastet wird. Ist von einer vorwiegend frontseitigen Belastung des Zentralachsanhängers auszugehen, ist es günstiger die Luftfederbälge der zwei hinteren Achsen zu einem gemeinsamen Luftfederungskreis zusammenzuschalten.

Die Erfindung wird nachfolgend anhand von Ausführungsbeispielen unter Verwendung von Zeichnungen näher erläutert.

Es zeigen:

Figur 1    - einen zweiachsigen Zentralachsanhänger in schematischer Darstellung in Draufsicht und

Figur 2    - den Zentralachsanhänger gemäß Figur 1 in seitlicher Ansicht und

Figur 3    - verschiedene Kraft-/Zeit-Diagramme.

In den Figuren werden gleiche Bezugszeichen für einander entsprechende Elemente verwendet.

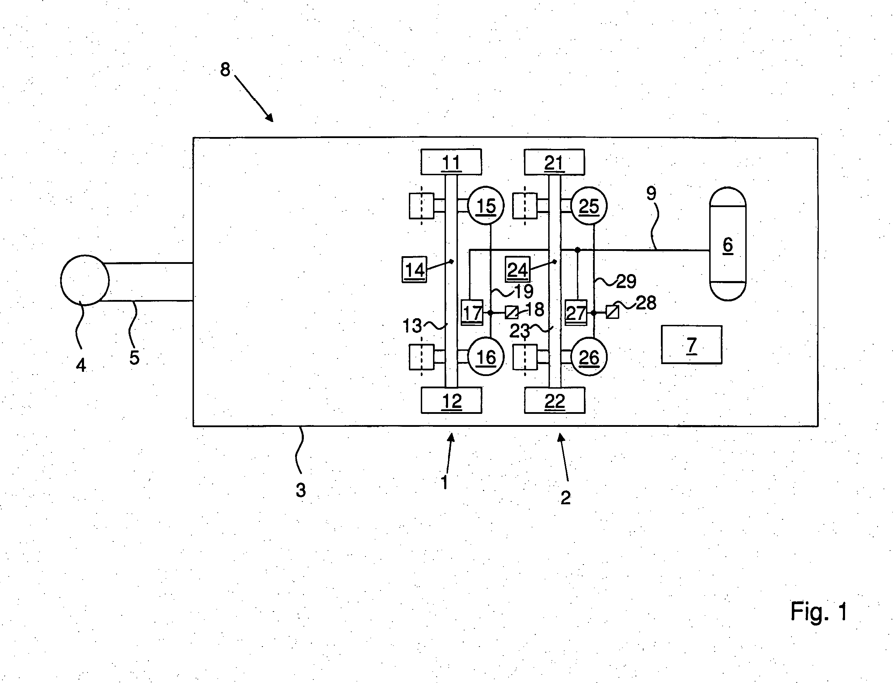

Die Figur 1 zeigt einen Zentralachsanhänger 8 in Draufsicht in schematischer Darstellung. Der Zentralachsanhänger 8 weist eine erste vordere luftgefederte Achse 1 sowie eine zweite, hintere luftgefederte Achse 2 auf. Eine "Achse" in diesem Sinne umfasst die Anordnung aus einer jeweiligen Achsstange 13, 23 sowie mit dieser Achsstange 13, 23 verbundene Räder 11, 12, 21, 22. Die erste Achse 1 ist über Luftfederbälge 15, 16 gegenüber einem Anhängeraufbau 3 abgefedert. Die zweite Achse 2 ist über Luftfederbälge 25, 26 gegenüber dem Anhängeraufbau 3 abgefedert. Der Anhängeraufbau 3 des Zentralachsanhängers 8 ist frontseitig über eine Koppelstange 5 mit einer Anhängerkupplung 4 versehen. Über die Anhängerkupplung 4 wird der Zentralachsanhänger 8 an ein Zugfahrzeug angekoppelt.

Die Luftfederbälge 15, 16 der ersten Achse 1 sind über pneumatische Leitungen 19 miteinander und mit einer ersten elektrisch betätigbaren pneumatischen Ventileinrichtung 17 sowie einem ersten Drucksensor 18 verbunden. Hierdurch wird ein erster Luftfederungskreis 15, 16, 17, 18, 19 gebildet. Die Luftfederbälge 25, 26 der zweiten Achse 2 sind über pneumatische Leitungen 29 mit einer zweiten elektrisch betätigbaren pneumatischen Ventileinrichtung 27 sowie einem zweiten Drucksensor 28 verbunden. Hierdurch wird ein zweiter Luftfederungskreis 25, 26, 27, 28, 29 gebildet, der getrennt vom ersten Luftfederungskreis 15, 16, 17, 18, 19 ist. Durch separate Betätigung der ersten und der zweiten elektrisch betätigbaren pneumatischen Ventileinrichtung 17, 27 können die Luftmerigen in dem ersten und in dem zweiten Luftfederungskreis separat voneinander eingestellt werden.

Die erste und die zweite elektrisch betätigbare pneumatische Ventileinrichtung 17, 27 sind über pneumatische Leitungen 9 mit einem Druckluftvorratsbehälter 6 verbunden, der an dem Zentralachsanhänger 8 angeordnet ist. Die Erfindung kann auch bei Zentralachsanhängern ohne eigenen Druckluftvorratsbehälter realisiert werden. In diesem Fall wird die Druckluftleitung 9 mit einer Druckluftvorratsleitung des Zugfahrzeuges verbunden. Die erste und die zweite elektrisch betätigbare pneumatische Ventileinrichtung 17, 27 weisen jeweils zusätzlich einen Entlüftungsanschluss auf, über den Druckluft aus den jeweiligen Luftfederbälgen in die Atmosphäre abgelassen werden kann. Die elektrisch betätigbare pneumatische Ventileinrichtung 17 bzw. 27 weist jeweils drei Funktionsstellungen auf, nämlich "Luftmenge im Luftfederungskreis halten", "Luftmenge im Luftfederungskreis erhöhen" und Luftmenge im Luftfederungskreis verringern", die durch elektrische Betätigung der Ventileinrichtung 17 bzw. 27 jeweils separat einstellbar sind.

Die in Figur 1 dargestellte Luftfederungsanlage weist zusätzlich zur Durchführung einer Niveauregelungsfunktion Niveauerfassungssensoren 14, 24 auf, die z.B. als Wegsensoren ausgebildet sein können und die die jeweilige Niveaulage derjenigen Achse 1, 2, mit der die Niveauerfassungssensoren jeweils gekoppelt sind, erfassen. Die Niveauerfassungssensoren 14, 24, die erste und die zweite elektrisch betätigbare pneumatische Ventileinrichtung 17, 27 sowie der erste und der zweite Drucksensor 18, 28 sind über elektrische Leitungen, die in der Figur 1 aus Übersichtlichkeitsgründen nicht dargestellt sind, mit einer elektronischen Steuerungseinrichtung 7 verbunden. Die elektronische Steuerungseinrichtung 7 führt z.B. eine Niveauregelungsfunktion der Luftfederungsanlage durch. Zusätzlich führt die elektronische Steuerungseinrichtung ein Verfahren zur Einstellung der Stützlast des Zentralachsanhängers 8, wie eingangs erläutert, aus.

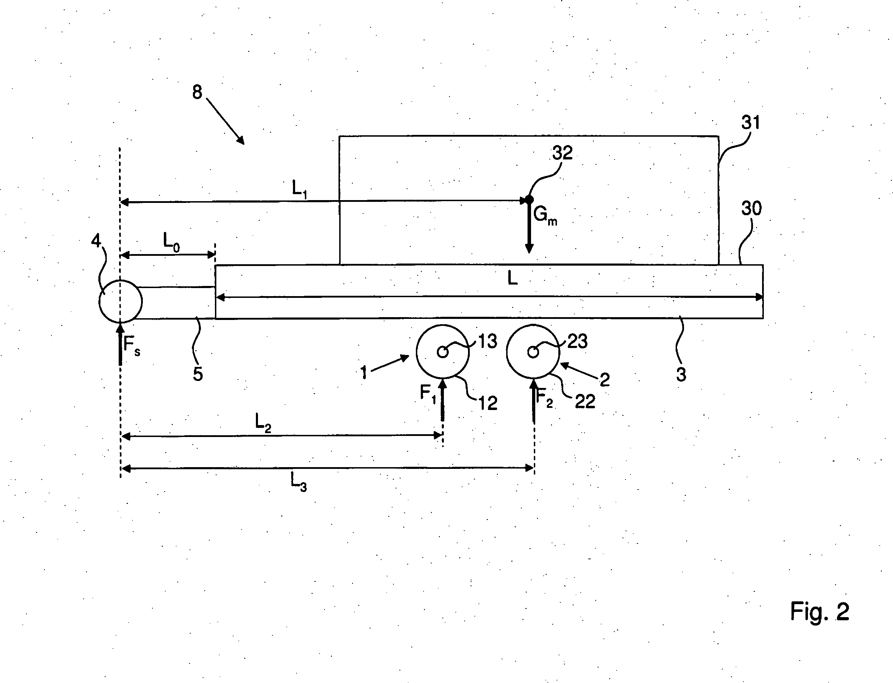

Die Figur 2 zeigt den Zentralachsanhänger 8 in seitlicher Ansicht mit weiteren Details. Erkennbar sind an jeweiligen Achsstangen 13, 23 befestigte Räder 12, 22 der ersten und der zweiten Fahrzeugachse 1, 2. Dargestellt ist ferner der Anhängeraufbau 3 mit einer Ladefläche 30. Auf der Ladefläche 30 ist eine Ladung 31 angeordnet. Erkennbar ist außerdem die über die Koppelstange 5 mit dem Anhängeraufbau 3 verbundene Anhängerkupplung 4.

In der Figur 2 sind zur Vorbereitung der weiteren Erläuterungen verschiedene geometrische Maße sowie die auftretenden Kräfte angegeben. Die angegebenen Größen haben folgende Bedeutung:

$G_m$ - Die durch die Masse m der Beladung 31 auftretende Gewichtskraft, bezogen auf einen Massenschwerpunkt 32 der Beladung 31.

$F_s$ - Stützlast an der Anhängerkupplung 4.

$F_1$ - Achslast der ersten Achse 1.

$F_2$ - Achslast der zweiten Achse 2.

$L$ - Länge der Ladefläche 30 in Längsrichtung des Zentralachsanhängers 8.

$L_0$ - Abstand des Angriffspunkts der Stützlast $F_s$ vom frontseitigen Ende der Ladefläche 30, was ungefähr der wirksamen Länge der Koppelstange 5 entspricht.

$L_1$ - Abstand zwischen dem Angriffspunkt der Stützlast $F_s$ vom Massenschwerpunkt 32.

$L_2$ - Abstand zwischen den Angriffspunkten der Stützlast $F_s$ und der Achslast $F_1$ der ersten Achse 1. :

$L_3$ - Abstand der Angriffspunkte der Stützlast, $F_s$ und der Achslast $F_2$ der zweiten Achse 2..

Die Größen $L$, $L_0$, $L_1$, $L_2$, $L_3$ betreffen die jeweils in Längsrichtung des Zentralachsanhängers 8 zu messenden Abstände.

Die Achslasten $F_1$, $F_2$ können dabei aus den erfassten Druckwerten des ersten und des zweiten Drucksensors 18, 28 ermittelt werden.

Die elektronische Steuerungseinrichtung 7 kann zur Feststellung, ob die aktuelle Stützlast $F_s$ außerhalb eines zulässigen Stützbereichs liegt, zunächst direkt die Achslasten $F_1$, $F_2$ miteinander vergleichen. Wenn die Bedingung

$$F_1 > F_2$$

nicht erfüllt ist, kann davon ausgegangen werden, dass die aktuelle Stützlast $F_s$ außerhalb eines zulässigen Stützlastbereichs liegt. In diesem Fall entlastet die elektronische Steuerungseinrichtung 7 die erste Achse 1, um hierdurch die aktuelle Stützlast $F_s$ zu erhöhen. Hierzu kann die elektronische Steuerungseinrichtung 7 z.B. die Luftmenge im ersten Luftfederungskreis 15, 16, 17, 18, 19 verringern oder die Luftmenge im zweiten Luftfederungskreis 25, 26, 27, 28, 29 erhöhen oder beides durchführen.

In einer vorteilhaften Weiterbildung bestimmt die elektronische Steuerungseinrichtung 7 ein Maß für die aktuelle Stützlast $F_s$ in folgender Weise:

$$F_s = F_1 \bullet \left( \frac{L_2}{L_1} - 1 \right) + F_2 \bullet \left( \frac{L_3}{L_1} - 1 \right)$$

Die elektronische Steuerungseinrichtung 7 vergleicht den ermittelten Wert für die aktuelle Stützlast $F_s$ mit vorgegebenen Grenzwerten, die einen zulässigen Stützlastbereich definieren, z.B. 0,5 t als unterem Grenzwert und 2 t als oberen Grenzwert. Wird dieser Stützlastbereich nicht erreicht, verändert die elektronische Steuerungseinrichtung 7 die Luftmenge in wenigstens einem der Luftfederungskreise in der zuvor beschriebenen Weise, um die aktuelle Stützlast $F_s$ wieder in den zulässigen Stützlastbereich zu bringen oder zumindest diesem anzunähern.

Gemäß einer vorteilhaften Weiterbildung ermittelt die elektronische Steuerungseinrichtung 7 die Größe $L_1$ zumindest näherungsweise nach folgender Gleichung:

$$L_1 = L_0 + \frac{L}{2} \bullet \frac{m - m_{leer}}{m_{max}}$$

Hierbei ist m die Summe aus $F_1$ und $F_2$, dividiert durch die Erdbeschleunigung 9. $m_{leer}$ ist das Leergewicht des Zentralachsanhängers, d.h. das Gewicht im unbeladenen Zustand, $m_{max}$ ist das zulässige Maximalgewicht des Zentralachsanhängers 8. Mit dieser Beziehung kann in guter Näherung ein Wert für $L_1$ bestimmt werden, weil in der Praxis davon ausgegangen werden kann, dass ein Anhänger von vorn nach hinten beladen wird und von hinten nach vorn entladen wird.

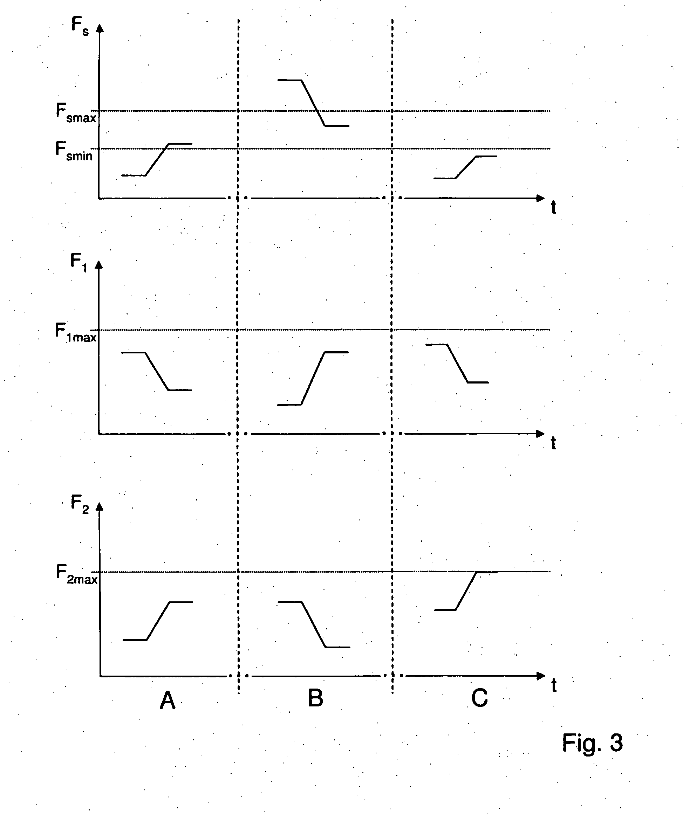

Die Figur 3 zeigt anhand dreier übereinander angeordneter Kraft-/ZeitDiagramme mögliche Verläufe der Stützlast $F_s$ (oberes Diagramm), der Achslast $F_1$ der

ersten Achse 1 (mittleres Diagramm) und der Achslast $F_2$ der zweiten Achse 2 (unteres Diagramm). Die Verläufe sind für jeweilige Zeitabschnitte A, B und C dargestellt, die unterschiedliche Fälle der Stützlastanpassung betreffen.

Bezüglich der Stützlast $F_s$ wird von einem zulässigen Stützlastbereich zwischen einem unteren Grenzwert $F_{smin}$ und einem oberen Grenzwert $F_{smax}$ ausgegangen. Die maximal zulässige Achslast $F_1$ der ersten Achse 1 beträgt im dargestellten Beispiel $F_{1max}$, die maximal zulässige Achslast $F_2$ der zweiten Achse 2 beträgt $F_{2max}$.

Im Abschnitt A ist der Fall dargestellt, dass der zulässige Stützlastbereich unterschritten wird, d.h. die Stützlast $F_s$ ist zunächst unterhalb von $F_{smin}$. Dies erkennt die elektronische Steuerungseinrichtung 7 und entlastet die erste Achse 1, was im mittleren Diagramm im Abschnitt A daran erkennbar ist, dass die Achslast $F_1$ sinkt. Dies führt zwangsläufig zu einer größeren Belastung der zweiten Achse 2, wie im unteren Diagramm erkennbar ist. Die Achslasten $F_1$, $F_2$ befinden sich jeweils noch unterhalb des zulässigen Grenzwerts $F_{1max}$, $F_{2max}$. Wie im oberen Diagramm im Abschnitt A erkennbar ist, wird die Stützlast $F_s$ in den zulässigen Bereich verlagert, wobei bereits eine Überschreitung des unteren Grenzwerts $F_{smin}$ ausreichend ist.

Im Abschnitt B wird der entgegengesetzte Fall betrachtet, dass die Stützlast $F_s$ zunächst zu hoch ist, d.h. oberhalb des oberen Grenzwertes $F_{smax}$ liegt. Die elektronische Steuerungseinrichtung 7 erkennt dies und entlastet die zweite Achse 2, wie im unteren Diagramm erkennbar ist. Hierdurch wird die erste Achse 1 stärker belastet, wie im mittleren Diagramm im Abschnitt B dargestellt ist. Die Achslasten $F_1$, $F_2$ befinden sich ebenfalls unterhalb der zulässigen Achslastgrenzwerte $F_{1max}$, $F_{2max}$. Wie im oberen Diagramm im Abschnitt B erkennbar ist, wird die Stützlast $F_s$ etwa in den mittleren Bereich des zulässigen Stützlastbereichs verlagert.

Im Abschnitt C ist wiederum ein Fall dargestellt, in dem die aktuelle Stützlast $F_s$ unterhalb des zulässigen Stützlastbereichs liegt. Es wird wiederum die erste Achse 1 entlastet. Dies führt, wie im unteren Diagramm erkennbar ist, zu einer Erhöhung der Achslast $F_2$ der zweiten Achse 2. Diese steigt so stark an, dass die maximal zulässige Achslast $F_{2max}$ erreicht wird. Die elektronische Steuerungseinrichtung 7 erkennt dies und beendet daraufhin die Entlastung der ersten Achse 1. Wie im oberen Diagramm im Abschnitt C erkennbar ist, ist hierdurch die Stützlast $F_s$ angehoben worden und liegt damit näher am zulässigen Stützlastbereich, erreicht diesen aber noch nicht, weil die Entlastung der ersten Achse 1 aufgrund einer drohenden Überlastung der zweiten Achse 2 vorzeitig beendet wurde.

**Patentansprüche**

1. Verfahren zur Einstellung der Stützlast ($F_s$) eines Zentralachsanhängers (8) mit wenigstens zwei luftgefederten Achsen (1, 2) und einer Luftfederungsanlage (6, 7, 9, 14, 15, 16, 17, 18, 19, 24, 25, 26, 27, 28, 29), **dadurch gekennzeichnet, dass** die Luftfederungsanlage (6, 7, 9, 14, 15, 16, 17, 18, 19, 24, 25, 26, 27, 28, 29), für wenigstens zwei luftgefederte Achsen (1, 2) des Zentralachsanhängers (8) achsweise getrennte Luftfederungskreise (15, 16, 17, 18, 19, 25, 26, 27, 28, 29) aufweist, in denen die jeweiligen Luftmengen getrennt voneinander einstellbar sind, und dass festgestellt wird, ob die aktuelle Stützlast ($F_s$) außerhalb eines zulässigen Stützlastbereichs ($F_{smin}$, $F_{smax}$) liegt, und, wenn die aktuelle Stützlast ($F_s$) außerhalb des zulässigen Stützlastbereichs ($F_{smin}$, $F_{smax}$) liegt, bei einer Überschreitung des zulässigen Stützlastbereichs ($F_{smin}$, $F_{smax}$) die aktuelle Stützlast ($F_s$) durch achsweise getrennte Veränderung der Luftmenge in wenigstens einem der Luftfederungskreise (15, 16, 17, 18, 19, 25, 26, 27, 28, 29) verringert wird und bei einer Unterschreitung des zulässigen Stützlastbereichs ($F_{smin}$, $F_{smax}$) die aktuelle Stützlast ($F_s$) durch achsweise getrennte Veränderung der Luftmenge in wenigstens einem der Luftfederungskreise (15, 16, 17, 18, 19, 25, 26, 27, 28, 29) erhöht wird wobei in dem Fall, dass eine oder mehrere der Achsen (1, 2) zusätzlich als Liftachse ausgebildet sind, automatisch die Achslifteinrichtung einer oder mehrerer Liftachsen betätigt wird, wenn die aktuelle Stützlast ($F_s$) außerhalb des zulässigen Stützlastbereichs ($F_{smin}$, $F_{smax}$) liegt.

2. Verfahren nach Anspruch 1, **dadurch gekennzeichnet, dass** mittels der Achslasten ($F_1$, $F_2$) der wenigstens zwei luftgefederten Achsen (1, 2) festgestellt wird, ob die aktuelle Stützlast ($F_s$) außerhalb eines zulässigen Stützlastbereichs ($F_{smin}$, $F_{smax}$) liegt.

3. Verfahren nach einem der vorhergehenden Ansprüche, **dadurch gekennzeichnet, dass** im Falle, dass die aktuelle Stützlast ($F_s$) außerhalb des zulässigen Stützlastbereichs ($F_{smin}$, $F_{smax}$) liegt, die aktuelle Stützlast ($F_s$) durch achsweise getrennte Veränderung der Luftmenge in wenigstens einem der Luftfederungskreise (15, 16, 17, 18, 19, 25, 26, 27, 28, 29) angepasst wird, bis die aktuelle Stützlast ($F_s$) innerhalb des zulässigen Stützlastbereichs ($F_{smin}$, $F_{smax}$) liegt.

4. Verfahren nach einem der vorhergehenden Ansprüche, **dadurch gekennzeichnet, dass** im Falle, dass die aktuelle Stützlast ($F_s$) außerhalb des zulässigen Stützlastbereichs ($F_{smin}$, $F_{smax}$) liegt, die aktuelle Stützlast ($F_s$) durch achsweise getrennte Veränderung der Luftmenge in wenigstens einem der Luftfederungskreise (15, 16, 17, 18, 19, 25, 26, 27, 28, 29) angepasst wird, bis an wenigstens einer Achse (1, 2) der für diese Achse zulässige Grenzwert ($F_{1max}$,

$F_{2max}$) der Achslast ($F_1$, $F_2$) erreicht ist.

5. Verfahren nach einem der vorhergehenden Ansprüche, **dadurch gekennzeichnet, dass** die Veränderung der Luftmenge in wenigstens einem der Luftfederungskreise (15, 16, 17, 18, 19, 25, 26, 27, 28, 29) automatisch durch eine elektronische Steuerungseinrichtung (7) durch Ansteuerung wenigstens einer elektrisch betätigbaren pneumatischen Ventileinrichtung (17, 27) durchgeführt wird.

6. Verfahren nach einem der vorhergehenden Ansprüche, **dadurch** gekenntzeichnet, dass bei einer Überschreitung des zulässigen Stützlastbereichs ($F_{smin}$, $F_{smax}$) die Achslast ($F_2$) einer zweiten, hinter einer ersten Achse (1) des Zentralachsanhängers (8) angeordneten Achse (2) gegenüber der Achslast ($F_1$) der ersten Achse (1) verringert wird, und bei einer Unterschreitung des zulässigen Stützlastbereichs ($F_{smin}$, $F_{smax}$) die Achslast ($F_1$) der ersten Achse (1) gegenüber der Achslast ($F_2$) der zweiten Achse (2) verringert wird.

7. Elektronische Steuerungseinrichtung (7), eingerichtet zur Einstellung der Stützlast ($F_s$) eines Zentralachsanhängers (8) nach einem Verfahren nach einem der vorhergehenden Ansprüche.

8. Luftfederungsanlage (6, 7, 9, 14, 15, 16, 17, 18, 19, 24, 25, 26, 27, 28, 29), die eingerichtet ist für einen Zentralachsanhänger (8) mit wenigstens zwei luftgefederten Achsen (1, 2), wobei die Luftfederungsanlage (6, 7, 9, 14, 15, 16, 17, 18, 19, 24, 25, 26, 27, 28, 29), für die wenigstens zwei luftgefederten Achsen (1, 2) des Zentralachsanhängers (8) achsweise getrennte Luftfederungskreise (15, 16, 17, 18, 19, 25, 26, 27, 28, 29) aufweist, in denen die jeweiligen Luftmengen getrennt voneinander einstellbar sind mit einer elektronischen Steuerungseinrichtung (7) nach Anspruch 7.

9. Zeritralachsanhänger (8) mit wenigstens zwei Achsen (1, 2) und einer Luftfederungsanlage (6, 7, 9, 14, 15, 16, 17, 18, 19, 24, 25, 26, 27, 28, 29), nach Anspruch 8.

**Claims**

1. Method for the adjustment of the supporting load ($F_s$) of a central axle trailer (8) comprising at least two axles (1, 2) with pneumatic suspension and a pneumatic suspension system (6, 7, 9, 14, 15, 16, 17, 18, 19, 24, 25, 26, 27, 28, 29), **characterized in that** the pneumatic suspension system (6, 7, 9, 14, 15, 16, 17, 18, 19, 24, 25, 26, 27, 28, 29) comprises separate pneumatic suspension circuits (15, 16, 17, 18, 19, 25, 26, 27, 28, 29) on the axle for at least two axles (1, 2) with pneumatic suspension of the central axle trailer (8), in which the respective quantities of air are able to be adjusted separately from one another, and that it is established whether the current supporting load ($F_s$) is outside a permitted supporting load range ($F_{smin}$, $F_{smax}$) and, if it is the case that the current supporting load ($F_s$) is outside the permitted supporting load range ($F_{smin}$, $F_{smax}$) when the permitted supporting load range ($F_{smin}$, $F_{smax}$) is exceeded, the current supporting load ($F_s$) is reduced by separate alteration of the quantity of air in at least one of the pneumatic suspension circuits (15, 16, 17, 18, 19, 25, 26, 27, 28, 29) on the axle and when the permitted supporting load range ($F_{smin}$, $F_{smax}$) is fallen below, the current supporting load ($F_s$) is increased by separate alteration of the quantity of air in at least one of the pneumatic suspension circuits (15, 16, 17, 18, 19, 25, 26, 27, 28, 29) on the axle, wherein if one or more of the axles (1, 2) are additionally configured as lifting axles, the axle lifting device of one or more lifting axles is automatically actuated if the current supporting load ($F_s$) is outside the permitted supporting load range ($F_{smin}$, $F_{smax}$).

2. Method according to Claim 1, **characterized in that** by means of the axle loads ($F_1$, $F_2$) of the at least two axles (1, 2) with pneumatic suspension, it is established whether the current supporting load ($F_s$) is outside a permitted supporting load range ($F_{smin}$, $F_{smax}$).

3. Method according to one of the preceding claims, **characterized in that** if the current supporting load ($F_s$) is outside the permitted supporting load range ($F_{smin}$, $F_{smax}$), the current supporting load ($F_s$) is adapted by separation alteration of the quantity of air in at least one of the pneumatic suspension circuits (15, 16, 17, 18, 19, 25, 26, 27, 28, 29) on the axle, until the current supporting load ($F_s$) is within the permitted supporting load range ($F_{smin}$, $F_{smax}$).

4. Method according to one of the preceding claims, **characterized in that** if the current supporting load ($F_s$) is outside the permitted supporting load range ($F_{smin}$, $F_{smax}$), the current supporting load ($F_s$) is adapted by separate alteration of the quantity of air in at least one of the pneumatic suspension circuits (15, 16, 17, 18, 19, 25, 26, 27, 28, 29) on the axle, until on at least one axle (1, 2) the limit value ($F_{1max}$, $F_{2max}$) of the axle load ($F_1$, $F_2$) permitted for said axle is reached.

5. Method according to one of the preceding claims, **characterized in that** the alteration of the quantity of air in at least one of the pneumatic suspension circuits (15, 16, 17, 18, 19, 25, 26, 27, 28, 29) is automatically carried out by an electronic control device (7) by activating at least one electrically actuatable pneumatic valve device (17, 27).

6. Method according to one of the preceding claims, **characterized in that** when the permitted supporting load range ($F_{smin}$, $F_{smax}$) is exceeded, the axle load ($F_2$) of a second axle (2) arranged behind a first axle (1) of the central axle trailer (8) is reduced relative to the axle load ($F_1$) of the first axle (1), and when the permitted supporting load range ($F_{smin}$, $F_{smax}$) is fallen below, the axle load ($F_1$) of the first axle (1) is reduced relative to the axle load ($F_2$) of the second axle (2).

7. Electronic control device (7) which is designed for the adjustment of the supporting load ($F_s$) of a central axle trailer (8) according to a method according to one of the preceding claims.

8. Pneumatic suspension system (6, 7, 9, 14, 15, 16, 17, 18, 19, 24, 25, 26, 27, 28, 29), which is designed for a central axle trailer (8) comprising at least two axles (1, 2) with pneumatic suspension, wherein the pneumatic suspension system (6, 7, 9, 14, 15, 16, 17, 18, 19, 24, 25, 26, 27, 28, 29) for the at least two axles (1, 2) with pneumatic suspension of the central axle trailer (8) has separate pneumatic suspension circuits (15, 16, 17, 18, 19, 25, 26, 27, 28, 29) on the axle in which the respective quantities of air are able to be adjusted separately from one another, comprising an electronic control device (7) according to Claim 7.

9. Central axle trailer (8) comprising at least two axles (1, 2) and a pneumatic suspension system (6, 7, 9, 14, 15, 16, 17, 18, 19, 24, 25, 26, 27, 28, 29), according to Claim 8.


**Revendications**

1. Procédé d'ajustement de la charge d'appui ($F_s$) d'une remorque à essieu central (8) comprenant au moins deux essieux à suspension pneumatique (1, 2) et une installation de suspension pneumatique (6, 7, 9, 14, 15, 16, 17, 18, 19, 24, 25, 26, 27, 28, 29), **caractérisé en ce que** l'installation de suspension pneumatique (6, 7, 9, 14, 15, 16, 17, 18, 19, 24, 25, 26, 27, 28, 29), pour au moins deux essieux à suspension pneumatique (1, 2) de la remorque à essieu central (8), présente des circuits de suspension pneumatique (15, 16, 17, 18, 19, 25, 26, 27, 28, 29) séparés pour chaque essieu, dans lesquels les quantités d'air respectives peuvent être ajustées séparément les unes des autres et **en ce que** l'on établit si la charge d'appui actuelle (s) se situe à l'extérieur d'une plage de charge d'appui admissible ($F_{smin}$, $F_{smax}$), et, si la charge d'appui actuelle ($F_s$) se situe à l'extérieur de la plage de charge d'appui admissible ($F_{smin}$, $F_{smax}$), en cas de dépassement par le haut de la charge d'appui admissible ($F_{smin}$, $F_{smax}$), la charge d'appui actuelle ($F_s$) est réduite par une modification séparée pour chaque essieu de la quantité d'air dans au moins l'un des circuits de suspension pneumatique (15, 16, 17, 18, 19, 25, 26, 27, 28, 29) et, en cas de dépassement par le dessous de la charge d'appui admissible ($F_{smin}$, $F_{smax}$), la charge d'appui actuelle ($F_s$) est augmentée par une modification séparée pour chaque essieu de la quantité d'air dans au moins l'un des circuits de suspension pneumatique (15, 16, 17, 18, 19, 25, 26, 27, 28, 29) et dans le cas où un ou plusieurs des essieux (1, 2) sont en outre réalisés sous forme d'essieu de levage, le dispositif de levage d'essieu d'un ou de plusieurs essieux de levage est actionné automatiquement si la charge d'appui actuelle ($F_s$) est en dehors de la plage de charge d'appui admissible ($F_{smin}$, $F_{smax}$).

2. Procédé selon la revendication 1, **caractérisé en ce qu'**au moyen des charges d'essieu ($F_1$, $F_2$) des au moins deux essieux à suspension pneumatique (1, 2), on établit si la charge d'appui actuelle ($F_s$) se situe à l'extérieur d'une plage de charge d'appui admissible ($F_{smin}$, $F_{smax}$).

3. Procédé selon l'une quelconque des revendications précédentes, **caractérisé en ce que** dans le cas où la charge d'appui actuelle ($F_s$) se situe en dehors de la plage de charge d'appui admissible ($F_{smin}$. $F_{smax}$), la charge d'appui actuelle ($F_s$) est adaptée par une modification séparée pour chaque essieu de la quantité d'air dans au moins l'un des circuits de suspension pneumatique (15, 16, 17, 18, 19, 25, 26, 27, 28, 29) jusqu'à ce que la charge d'appui actuelle ($F_s$) se situe à l'intérieur de la plage de charge d'appui admissible ($F_{smin}$, $F_{smax}$).

4. Procédé selon l'une quelconque des revendications précédentes, **caractérisé en ce que** dans le cas où la charge d'appui actuelle ($F_s$) se situe à l'extérieur de la plage de charge d'appui admissible ($F_{smin}$, $F_{smax}$), la charge d'appui actuelle ($F_s$) est adaptée par une modification séparée pour chaque essieu de la quantité d'air dans au moins l'un des circuits de suspension pneumatique (15, 16, 17, 18, 19, 25, 26, 27, 28, 29) jusqu'à ce que la valeur limite admissible ($F_{1max}$, $F_{2max}$) de la charge d'essieu ($F_1$, $F_2$) pour un essieu (1, 2) soit atteinte au moins au niveau de cet essieu.

5. Procédé selon l'une quelconque des revendications précédentes, **caractérisé en ce que** la modification de la quantité d'air dans au moins l'un des circuits de suspension pneumatique (15, 16, 17, 18, 19, 25, 26, 27, 28, 29) est effectuée automatiquement par un dispositif de commande électronique (7) par commande d'au moins un dispositif de soupape pneumatique (17, 27) à commande électrique.

6. Procédé selon l'une quelconque des revendications précédentes, **caractérisé en ce que** dans le cas d'un dépassement par le haut de la plage de charge d'appui admissible ($F_{smin}$, $F_{smax}$), la charge d'essieu ($F_2$) d'un deuxième essieu (2) disposé derrière un premier essieu (1) de la remorque à essieu central (8) est réduite par rapport à la charge d'essieu ($F_1$) du premier essieu (1), et dans le cas d'un dépassement par le bas de la plage de charge d'appui admissible ($F_{smin}$, $F_{smax}$), la charge d'essieu ($F_1$) du premier essieu (1) est réduite par rapport à la charge d'essieu ($F_2$) du deuxième essieu (2).

7. Dispositif de commande électronique (7), prévu pour ajuster la charge d'appui ($F_s$) d'une remorque à essieu central (8) selon un procédé selon l'une quelconque des revendications précédentes.

8. Installation de suspension pneumatique (6, 7, 9, 14, 15, 16, 17, 18, 19, 24, 25, 26, 27, 28, 29), prévu pour une remorque à essieu central (8) comprenant au moins deux essieux à suspension pneumatique (1, 2), l'installation de suspension pneumatique (6, 7, 9, 14, 15, 16, 17, 18, 19, 24, 25, 26, 27, 28, 29) présentant, pour les au moins deux essieux à suspension pneumatique (1, 2) de la remorque à essieu central (8), des circuits de suspension pneumatique (15, 16, 17, 18, 19, 25, 26, 27, 28, 29) séparés pour chaque essieu, dans lesquels les quantités d'air respectives peuvent être ajustées séparément les unes des autres au moyen d'un dispositif de commande électronique (7) selon la revendication 7.

9. Remorque à essieu central (8) comprenant au moins deux essieux (1, 2) et l'installation de suspension pneumatique (6, 7, 9, 14, 15, 16, 17, 18, 19, 24, 25, 26, 27, 28, 29) selon la revendication 8.

Fig. 1

Fig. 2

Fig. 3

**EP 2 591 928 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2390121 A1
- DE 19718258 A1
- EP 2138333 A1
- DE 19707210 B4
- DE 102008003206 A1